(19) Europäisches Patentamt / European Patent Office / Office européen des brevets

(11) **EP 2 057 840 B1**

(12) **EUROPEAN PATENT SPECIFICATION**

(45) Date of publication and mention
of the grant of the patent:
**06.10.2010 Bulletin 2010/40**

(51) Int Cl.:
***H04N 7/01*** (2006.01)

(21) Application number: **07826050.2**

(22) Date of filing: **20.08.2007**

(86) International application number:
**PCT/IB2007/053303**

(87) International publication number:
**WO 2008/023316 (28.02.2008 Gazette 2008/09)**

(54) **MOTION-COMPENSATED PROCESSING OF IMAGE SIGNALS**

VERARBEITUNG VON BILDSIGNALEN MIT BEWEGUNGSKOMPENSATION

TRAITEMENT PAR MOUVEMENT COMPENSÉ DE SIGNAUX D'IMAGE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **21.08.2006 US 822958 P**

(43) Date of publication of application:
**13.05.2009 Bulletin 2009/20**

(73) Proprietor: **NXP B.V.
5656 AG Eindhoven (NL)**

(72) Inventors:
• **DE HAAN, Gerard
NL-5656 AE Eindhoven (NL)**
• **BELLERS, Erwin, B.
NL-5656 AE Eindhoven (NL)**
• **JANSSEN, Johan, G., W., M.
NL-5656 AE Eindhoven (NL)**

(74) Representative: **Epping - Hermann - Fischer
Patentanwaltsgesellschaft mbH
Postfach 20 07 34
80007 München (DE)**

(56) References cited:
**EP-A- 1 551 181          WO-A-02/37846
US-A1- 2002 093 588**

• **LEE S-H ET AL: "Adaptive motion-compensated
frame rate up-conversion" ELECTRONICS
LETTERS, IEE STEVENAGE, GB, vol. 38, no. 10,
9 May 2002 (2002-05-09), pages 451-452,
XP006018213 ISSN: 0013-5194**
• **CHEN HA-FEG ET AL: "Smooth frame insertion
method for motion-blur reduction in LCDs"
EURODISPLAY, XX, XX, 1 January 2005
(2005-01-01), pages 359-361, XP009087929**

**Description**

FIELD OF THE INVENTION

The invention relates to a method and device for motion-compensated processing of image signals.

BACKGROUND OF THE INVENTION

US-20020093588 A1 discloses a cost-effective film-to-video converter for high definition television. High definition video signals are pre-filtered and down-sampled by a video converter system to standard definition picture sizes. Standard definition motion estimators employed for field rate up-conversion are then utilized to estimate motion vectors for the standard definition pictures. The resulting motion vectors are scaled and post-processed for motion smoothness for use in motion compensated up-conversion of the field rate for the high definition pictures.

SUMMARY OF THE INVENTION

It is, inter alia, an object of the invention to provide an improved motion-compensated processing of image signals. The invention is defined by the independent claims. Advantageous embodiments are defined in the dependent claims.

The invention is based on the observation that the finest details, particularly on Flat Panel displays, are lost for faster motion. So, in one aspect of the invention, the idea is to use efficient motion-compensated up-conversion operating at a lower spatial resolution, and to add back the uncompensated fine details for slow moving image parts to the up-scaled result. In this way, motion-compensated processing of HDTV signals is possible at mitigated investments in hardware and/or software. A main difference with US-20020093588 is that in that reference, the motion-compensated processing (but for the calculation of the motion vectors) is still carried out on high-definition signals, while it is now proposed to carry out the motion-compensated interpolation on down-converted signals. An embodiment of the invention provides advantageous ways to mix the up-scaled interpolated image with the original dependent on the speed so as to keep full resolution / sharpness for stationary images and to use the motion-compensated image for moving images; at high speed the output is dominated by the motion-compensated image.

These and other aspects of the invention will be apparent from and elucidated with reference to the embodiments described hereinafter.

BRIEF DESCRIPTION OF THE DRAWINGS

Fig. 1 shows a first embodiment of the present invention;
Fig. 2 shows a second embodiment of the present invention; and
Fig. 3 shows the spatio-temporally neighboring blocks whose vectors are used to determine consistency.

DESCRIPTION OF EMBODIMENTS

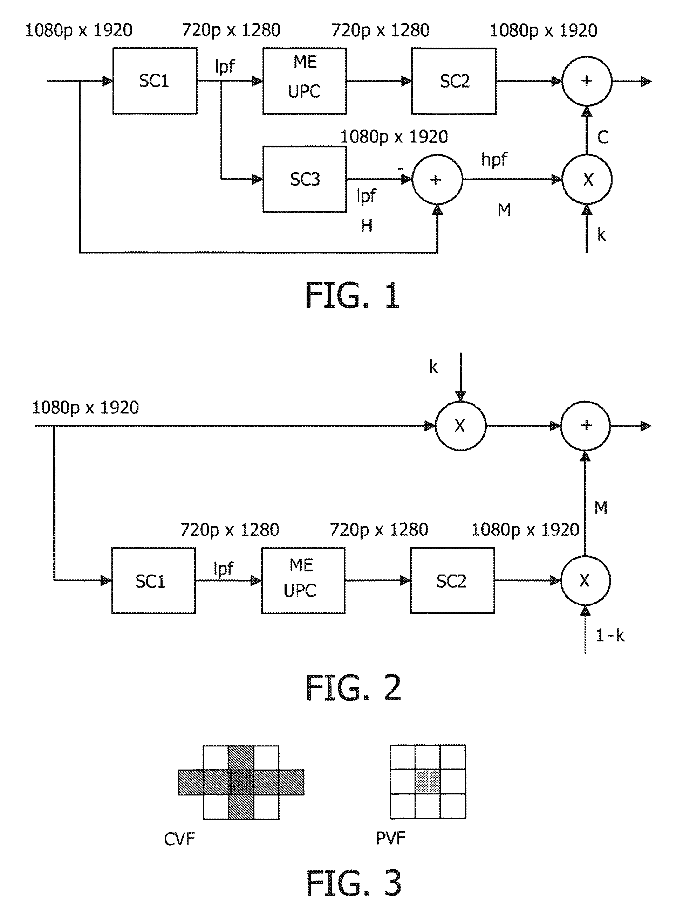

Fig. 1 shows a first embodiment of the present invention. A high-resolution input image signal having 1080 progressive (i.e. non-interlaced) lines and 1920 pixels/line is down-scaled by a down-scaler sc1 to obtain a lower resolution image lpf having 720 lines and 1280 pixels/line. Motion vectors are calculated by a motion vector estimator ME on the basis of the lower resolution image, which is then subjected to motion-compensated up-conversion UPC, and thereafter up-scaled by an up-scaler sc2 to the original 1080/1920 format.

The lower resolution image lpf is also up-scaled by an up-scaler sc3 to the original 1080/1920 format, and then subtracted from the input signal to obtain a high-pass filtered signal hpf. So, the combination of down-scaler sc1, upscaler sc3, and the subtracter forms a high-pass filter H. In an alternative embodiment, a genuine high-pass filter is used. The high-pass filtered signal hpf is multiplied by a factor k and then added to the up-scaled motion-compensated signal by means of a multiplier and an adder which together form a combining circuit C. The high-pass filter H and the combining circuit C together form a mixer M that combines (a high-pass filtered version of) the input signal with the upscaled motion-compensated signal from up-scaler sc2.

Fig. 2 shows a second embodiment of the present invention, which is more hardware-friendly than the embodiment of Fig. 1 as only two scalers sc1, sc2 are used instead of three. Again, a high-resolution input image signal having 1080 lines and 1920 pixels/line is down-scaled by down-scaler sc1 to obtain a lower resolution image lpf having 720 lines and 1280 pixels/line. Motion vectors are calculated by motion vector estimator ME on the basis of the lower resolution image, which is then subjected to motion-compensated up-conversion UPC, and thereafter up-scaled by up-scaler sc2 to the original 1080/1920 format. The up-scaled motion-compensated signal and the input signal are then mixed in a ratio (1-k):k by means of two multipliers and an adder, which together form mixer M.

In the embodiments of Figs. 1 and 2, to calculate the mix factor, the following elements are preferably used: the previous and current vector fields, the current vector length, and the luminance value. In the embodiment of Fig. 2 the output is defined by Output = k*Orig + (1-k)*NM_result, where k is a mixing factor, Orig is the original input image, and NM_result is the output of the motion-compensated up-conversion.

As regards using the previous and current vector fields, the spatio-temporal consistency is calculated. The largest difference in vector length is determined between the vector of the current block and all other vectors within a spatio-temporal aperture comprising blocks from a current vectors field CVF and a previous vector field PVF as shown in Fig. 3. Basic idea: no mixing in inconsistent areas. In one example, with 8 bits video, k_inconsistency is 1 if the maximum difference in vector lengths is 0, en k_inconsistency is 0 if this maximum difference is 8 or more, with a linear transition between 0 and 1 for vector length differences between 0 and 8.

As regards using the current vector length, the length of the motion vector of the current block is calculated. Basic idea: for zero and small motion, mixing is allowed, and for large motion not (as it would result in severe artifacts). Result: (10 bits and) full resolution for stationary image parts and (8 bits) lower resolution for moving image parts. In one example, with 8 bits video, k_vectorlenght = 1 if the vector length is 0, and k_vectorlength = 0 if the vector length is 4 or more, with a linear transition between 0 and 1 for vector lengths between 0 and 4.

As regards using the luminance value, the basic idea is that for very dark picture regions do not apply the switching as the switching in itself becomes more easily visible, and rely on the MC lower resolution only. In one example, with 8 bits video, k_luma = 0 if the pixel value is less than 25, and k_luma = 1 if the pixel value is 32 or more, with a linear transition between 0 and 1 for pixel values between 25 and 32.

The final mix factor k is defined by

k = k_inconsistency * k_vectorlength * k_luma.

In more detail, the basic concept is defined by:

$$F_{OUT}(\overline{x}, n - \alpha) = F_{MC}^{LF}(\overline{x}, n - \alpha) + kF_{ORIG}^{HF}(\overline{x}, n)$$

with $0 \leq k \leq 1$, spatial coordinate $\overline{x} = (x, y)^T$ with T for transpose, $0 \leq \alpha \leq 1$, n the picture number, $F_{MC}^{LF}$ the low-pass motion-compensated (temporally interpolated) picture, and $F_{ORIG}^{HF}$ the high-pass of the original input picture.

The low and high pass pictures have obviously the same spatial resolution, although the temporal interpolation of the low-pass picture can be applied at a much lower resolution followed by a spatial scaler to arrive at the output resolution.

In stationary picture parts, the k factor can be set to 1, and as such the complete frequency spectrum is being preserved. There is basically no loss of resolution (unless the interpolator introduces errors). For fast moving image parts, the k value is set to 0, and as such the output has only spectral components in the lower frequency spectrum. The higher spectral components are anyway harder to observe, in particularly on an LCD panel. Finally, for slow moving image parts, k is set to an intermediate value, and therefore the output spectrum contains all low and some higher spectral frequency components. Ifk is set too high, there is a risk on introducing judder, as the high frequency components are not compensated for motion. If k is locally set too low, loss of spatial resolution occurs.

Although there are various means to control this k according to the above description, in a preferred embodiment, the control signal k depends on the consistency of the local motion vectors, the length of the motion vector and the pixel level, i.e.:

$$k = k_{consistency} k_{vector} k_{pixel}$$

The consistency is determined by the largest difference ('MVD') between the motion vector for the current block (blue in the picture below) and the selected neighbors: the spatial neighbors (in green) and the temporal neighbor (in gray).

A block of pixels is typically 8 by 8 pixels.

The difference is calculated by the absolute difference of the x components and y components of the motion vectors.

Then $k_{consistency}$ is determined by:

$$k_{consistency} = 1 - CLIP(\beta MVD, 0, 1)$$

and with CLIP(a,b,c) defined as CLIP(a,b,c) = a if $b \leq a \leq c$ and, CLIP(a,b,c) = b is a<b and CLIP(a,b,c) = c if a>c. Furthermore, $\beta$ is a fixed gain/scaling factor.

The dependency on the vector length is defined by:

$$k_{vector} = 1 - CLIP(\gamma L, 0, 1)$$

with L the vector length (which is the sum of the absolute horizontal vector component and the vertical vector component), and $\gamma$ a programmable gain factor.

Furthermore, it was found that changes near black are more visible than in other parts of the grey scale. As such, a dependency on the pixel value was added:

$$k_{pixel} = CLIP(\eta(F(\bar{x}, n) - \kappa), 0, 1)$$

with $\eta$ a gain factor and $\kappa$ an offset. So for dark pixels this gain factor tends towards zero and for brighter towards one.

One embodiment of the invention can be summarized as follows. An apparatus for motion-compensated picture-rate conversion, the apparatus comprising means sc1 to downscale an input image, means ME to estimate motion using the downscaled image, means UPC to interpolate an intermediate downscaled image using the estimated motion and the downscaled image, means sc2 to upscale the interpolated image, and means M to output a combination of the up-scaled intermediate downscaled image and (a (high-pass) filtered version of) the input image. The invention is advantageously used in a display device (e.g. a TV set) comprising a device as shown in Figs. 1 or 2 to obtain output images, and a display for displaying the output images.

It should be noted that the above-mentioned embodiments illustrate rather than limit the invention, and that those skilled in the art will be able to design many alternative embodiments without departing from the scope of the appended claims. In the claims, the expression "combining signal A with signal B" includes the embodiment that a first signal derived from signal A is combined with a second signal derived from signal B, such as where only a high-frequency part of a signal is used in the combination. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device claim enumerating several means, several of these means may be embodied by one and the same item of hardware. The mere fact that certain measures are recited in mutually different dependent claims does not indicate that a combination of these measures cannot be used to advantage.

**Claims**

1. A method of motion-compensated processing of images, the method comprising the steps of:

   down-scaling (sc1) input images to obtain down-scaled images;
   subjecting the down-scaled images to motion-compensated processing (ME UPC) to obtain motion-compensated images;
   up-scaling (sc2) the motion-compensated images to obtain up-scaled motion-compensated images; and
   combining (M) the up-scaled motion-compensated images with the input images to obtain output images.

2. A device for motion-compensated processing of images, the device comprising:

   a down-scaler (sc1) for down-scaling input images to obtain down-scaled images;
   a motion-compensated processor (ME UPC) for subjecting the down-scaled images to motion-compensated processing to obtain motion-compensated images;

an up-scaler (sc2) for up-scaling the motion-compensated images to obtain up-scaled motion-compensated images; and

a mixer (M) for combining the up-scaled motion-compensated images with the input images to obtain output images.

3.  A device as claimed in claim 2, wherein the mixer (M) is coupled to receive a control signal (k) for combining the up-scaled motion-compensated images with the input images to obtain output images in dependence on a speed of moving objects in the down-scaled images.

4.  A device as claimed in claim 3, wherein the control signal (k) further depends on a consistency of motion vectors used in the motion-compensated processing.

5.  A device as claimed in claim 3, wherein the control signal (k) further depends on a brightness of the down-scaled images.

6.  A device as claimed in claim 2, wherein the mixer comprises:

a high-pass filter (H) for filtering the input image signals to obtain high-pass filtered image signals; and

a combining circuit (C) for combining the high-pass filtered image signals and the up-scaled motion-compensated images to obtain output images.

7.  A display device, comprising:

a device as claimed in claim 2 to obtain output images; and

a display for displaying the output images.

**Patentansprüche**

1.  Verfahren zur bewegungskompensierten Bearbeitung von Bildern, wobei das Verfahren die Schritte umfasst:

Reduzieren (sc1) von Eingangsbildern, um reduzierte Bilder zu erhalten;

Unterziehen der reduzierten Bilder einer bewegungskompensierten Bearbeitung (ME UPC), um bewegungskompensierte Bilder zu erhalten;

Erweitern (sc2) der bewegungskompensierten Bilder, um erweiterte bewegungskompensierte Bilder zu erhalten; und

Kombinieren (M) der erweiterten bewegungskompensierten Bilder mit den Eingangsbildern, um Ausgabebilder zu erhalten.

2.  Vorrichtung zur bewegungskompensierten Bearbeitung von Bildern, wobei die Vorrichtung umfasst:

eine Reduktionseinheit (sc1) zum Reduzieren von Eingangsbildern, um reduzierte Bilder zu erhalten;

einen bewegungskompensierten Prozessor (ME UPC), um die reduzierten Bilder einer bewegungskompensierten Bearbeitung zu unterziehen, um bewegungskompensierte Bilder zu erhalten;

eine Erweiterungseinheit (sc2) zum Erweitern der bewegungskompensierten Bilder, um erweiterte bewegungskompensierte Bilder zu erhalten; und

eine Mischeinheit (M) zum Kombinieren der erweiterten bewegungskompensierten Bilder mit den Eingangsbildern, um Ausgabebilder zu erhalten.

3.  Vorrichtung nach Anspruch 2, wobei die Mischeinheit (M) so angeschlossen ist, dass sie ein Steuersignal (k) zum Kombinieren der erweiterten bewegungskompensierten Bilder mit den Eingangsbildern erhält, um Ausgabebilder in Abhängigkeit von einer Geschwindigkeit von sich bewegenden Objekten in den reduzierten Bildern zu erhalten.

4.  Vorrichtung nach Anspruch 3, wobei das Steuersignal (k) darüber hinaus von einer Stetigkeit von in der bewegungskompensierten Bearbeitung verwendeten Bewegungsvektoren abhängt.

5.  Vorrichtung nach Anspruch 3, wobei das Steuersignal (k) darüber hinaus von einer Helligkeit der reduzierten Bilder abhängt.

**6.** Vorrichtung nach Anspruch 2, wobei die Mischeinheit umfasst:

ein Hochpassfilter (H) zum Filtern der Eingangsbildsignale, um hochpassgefilterte Bildsignale zu erhalten; und
eine Kombinationsschaltung (C) zum Kombinieren der hochpassgefilterten Bildsignale mit den erweiterten bewegungskompensierten Bildern, um Ausgabebilder zu erhalten.

**7.** Anzeigevorrichtung, umfassend:

eine Vorrichtung nach Anspruch 2 zum Erhalt von Ausgabebildern; und
eine Anzeige zum Anzeigen der Ausgabebilder.

**Revendications**

**1.** Procédé de traitement d'images à compensation de mouvement, le procédé comportant les étapes de :

conversion en basse définition (sc1) d'images d'entrée pour obtenir des images converties en basse définition ;
soumission des images converties en basse définition à un traitement à compensation de mouvement (ME UPC) pour obtenir des images compensées en mouvement ;
conversion en haute définition (sc2) des images compensées en mouvement pour obtenir des images compensées en mouvement converties en haute définition ; et
combinaison (M) des images compensées en mouvement converties en haute définition avec les images d'entrée pour obtenir des images de sortie.

**2.** Dispositif de traitement d'images à compensation de mouvement, le dispositif comportant :

un convertisseur en basse définition (sc1) destiné à convertir en basse définition des images d'entrée pour obtenir des images converties en basse définition ;
un processeur à compensation de mouvement (ME UPC) destiné à soumettre les images converties en basse définition à un traitement à compensation de mouvement pour obtenir des images compensées en mouvement ;
un convertisseur en haute définition (sc2) destiné à convertir en haute définition les images compensées en mouvement pour obtenir des images compensées en mouvement converties en haute définition ; et
un mélangeur (M) destiné à combiner les images compensées en mouvement converties en haute définition avec les images d'entrée pour obtenir des images de sortie.

**3.** Dispositif selon la revendication 2, où le mélangeur (M) est couplé pour recevoir un signal de commande (k) en vue de combiner les images compensées en mouvement converties en haute définition avec les images d'entrée pour obtenir des images de sortie en fonction d'une vitesse d'objets en mouvement dans les images converties en basse définition.

**4.** Dispositif selon la revendication 3, où le signal de commande (k) dépend en outre d'une cohérence de vecteurs de mouvement utilisés dans le traitement à compensation de mouvement.

**5.** Dispositif selon la revendication 3, où le signal de commande (k) dépend en outre d'une luminosité des images converties en basse définition.

**6.** Dispositif selon la revendication 2, où le mélangeur comprend :

un filtre passe-haut (H) destiné à filtrer les signaux d'images d'entrée pour obtenir des signaux d'images filtrés en passe-haut ; et
un circuit de combinaison (C) destiné à combiner les signaux d'images filtrés en passe-haut et les images compensées en mouvement converties en haute définition pour obtenir des images de sortie.

**7.** Dispositif d'affichage, comportant :

un dispositif selon la revendication 2 pour obtenir des images de sortie ; et

un afficheur destiné à afficher les images de sortie.

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020093588 A1
- US 20020093588 A